(19) Europäisches Patentamt / European Patent Office / Office européen des brevets

(11) **EP 1 868 376 A1**

(12) **EUROPEAN PATENT APPLICATION**
published in accordance with Art. 158(3) EPC

(43) Date of publication:
**19.12.2007 Bulletin 2007/51**

(51) Int Cl.:
**H04N 5/335** (2006.01)

(21) Application number: **06712999.9**

(86) International application number:
**PCT/JP2006/301856**

(22) Date of filing: **03.02.2006**

(87) International publication number:
**WO 2006/090565 (31.08.2006 Gazette 2006/35)**

(84) Designated Contracting States:
**DE FR GB**

(30) Priority: **22.02.2005 JP 2005045042**

(71) Applicant: **MATSUSHITA ELECTRIC INDUSTRIAL CO., LTD**
**Kadoma-shi, Osaka 571-8501 (JP)**

(72) Inventors:
• **ISHIMOTO, Hisato**
**c/o Matsushita Electric Industrial Co.,Ltd.**
**2-1-61, Shiromi,Chuo-ku, Osaka-shi, Osaka**
**540-6207 (JP)**

• **UETA, Atsushi**
**c/o Matsushita Electric Industrial Co.,Ltd.**
**2-1-61, Shiromi,Chuo-ku, Osaka-shi, Osaka**
**540-6207 (JP)**
• **NEZAKI, Shinsuke**
**c/o Matsushita Electric Industrial Co.,Ltd.**
**2-1-61, Shiromi,Chuo-ku, Osaka-shi, Osaka**
**540-6207 (JP)**

(74) Representative: **Crawford, Andrew Birkby**
**A.A. Thornton & Co.,**
**235 High Holborn**
**London WC1V 7LE (GB)**

(54) **METHOD FOR DRIVING SOLID-STATE IMAGE PICKUP DEVICE, AND SOLID-STATE IMAGE PICKUP DEVICE**

(57)     In a MOS solid-state imaging device, each of a plurality of pixel cells has a charge holding unit 305. In order to reset the signal charge accumulated in the charge holding unit 305 in each pixel cell in an n-th row, the reset pulse supplied to the gate electrode of the reset transistor is switched to the high potential level Hi. Under this state, the reference voltage source VDDCELL is switched to the low potential level Lo. In response, the reset pulse n temporarily drops toward Lo because of the coupling capacity 308. The reset pulse n is switched to Lo after its potential rises back to Hi.

FIG.6

## Description

Technical Field

The present invention relates to a method for driving a solid-state imaging device and also to the solid-state imaging device. Especially, the present invention relates to a technique of suppressing reduction in dynamic range of a MOS solid-state imaging device that is reduced in size and increased in pixel density.

Background Art

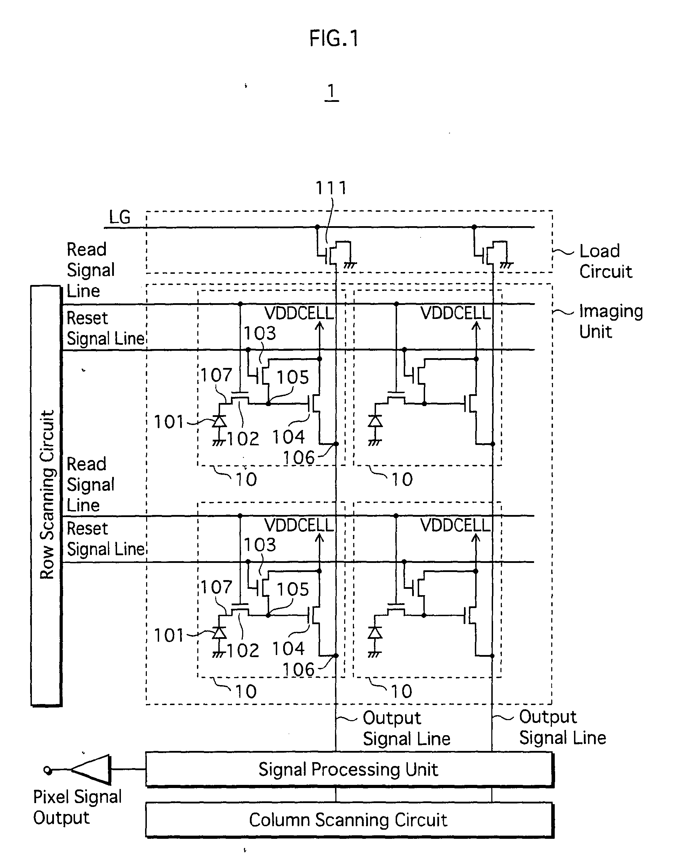

In recent years, CCD and MOS are two types of solid-state imaging devices that have been increasingly developed. Especially, MOS solid-state imaging devices appear promising because of a number of advantages including high sensitivity and low power consumption.
The following is a brief description of a MOS solid-state imaging device (See, for example, Patent Document 1). Fig. 1 is a circuit diagram illustrating the major structure of a MOS solid-state imaging device according to thestate-of-the-art. As illustrated in Fig. 1, a solid- state imaging device 1 is composed of an imaging unit, a load circuit, a row scanning circuit, a signal processing unit, and a column scanning circuit. The imaging unit includes a plurality of pixel cells 10 and each pixel cell 10 in turn includes a photoelectric converter 101, a read transistor 102, a reset transistor 103, an amplification transistor 104, a charge holding unit 105, and an output unit 106.

The read transistor 102, the reset transistor 103, and the amplification transistor 104 constitute a MOS-FET (MOS Field Effect Transistor). The charge holding unit 105 is illustrated simply as a node in the circuit diagram. In the integrated circuit, however, the charge holding unit 105 is a PN junction and capable of holding a certain amount of electric charges.
The pixel cells are selected on a row-by-row basis, by being applied with a read pulse and a reset pulse from the row scanning circuit. In response, each selected pixel cell outputs a pixel signal to the signal processing unit via an output signal line. The signal processing unit processes and output the pixel signals on a column-by-column basis, in response to a scan pulse supplied to the signal from the column scanning circuit.

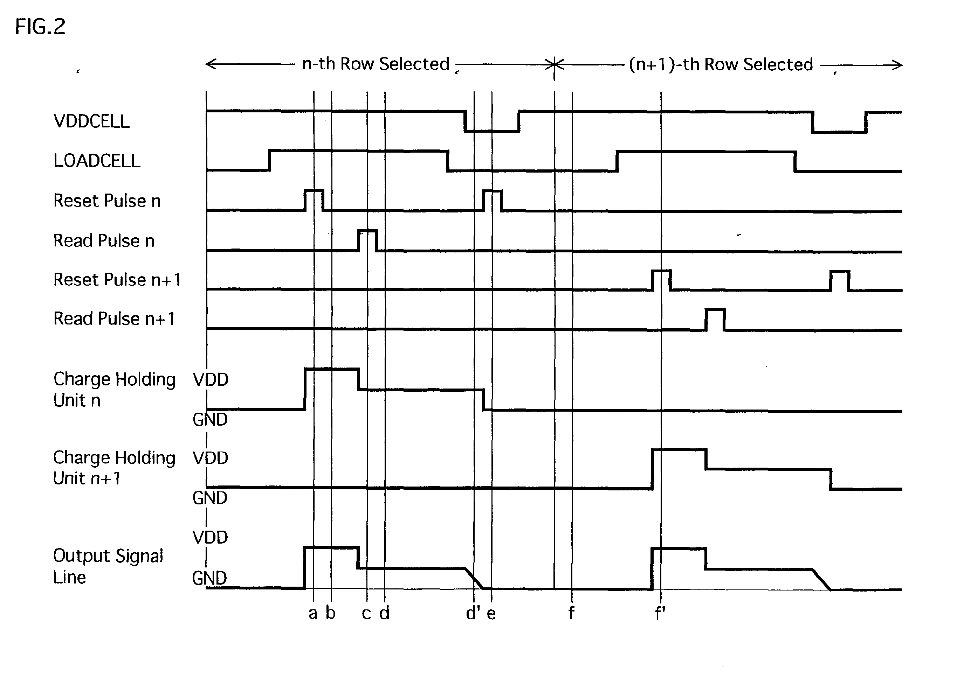

Next, operation of the solid-state imaging device 1 is described. Fig. 2 is a timing chart illustrating operation of the solid-state imaging device 1. As illustrated in Fig. 2, pixel cells 10 in the n-th row are initially selected. In this case, first, the reset pulse n is switched to the high potential level Hi, so that the reset transistor 103 goes ON. As a result, the potential of the charge holding unit 105 becomes equal to Hi of VDDCELL and thus the amplification transistor 104 outputs a responsive level of potential from the output unit 106. Thus, the potential of the output signal line rises (Fig. 2, Point a).

Next, the reset pulse n is switched to the low potential level Lo and thus the reset transistor 103 goes OFF. Yet, the potential of the charge holding unit 105 remains Hi for the time being (Fig. 2, Point b).
Next, the read pulse n, which is supplied to each pixel cell 10 in the n-th row, is switched to Hi, and thus the read transistor 102 goes ON. As a result, the electric charges having been accumulated in the photoelectric converter 101 responsively to optical information are caused to be read into the charge holding unit 105. Thus, the potential of the charge holding unit 105 drops. In response to the potential drop, the potential of the amplification transistor 104 at the output unit 106 drops along with the potential of the output signal line (Fig. 2, Point c).

Next, the read pulse n is switched to Lo and thus the read transistor 102 goes OFF (Fig. 2, Point d). The signal processing unit detects the potential of the output signal line at the temporal points b and d to measure the potential difference as a pixel signal. Then, the potential of VDDCELL is switched to Lo (Fig. 2, Point d'). Next, the reset pulse n is again switched to Hi and thus the reset transistor 103 goes ON. As a result, the potential of the charge holding unit 105 becomes equal to Lo of VDDCELL and the amplification transistor 104 goes OFF. With the above operating steps, each pixel cell 10 in the selected row completes output of the pixel signal (Fig. 2, Point e). Then, the pixel cells in the n-th row are deselected and pixel cells in the (n + 1)-th row are newly selected (Fig. 2, Point f).

As described above, the solid-state imaging device 1 applies the reset pulse only to the pixel cells 10 in the selected row at the temporal point a illustrated in Fig. 2. Consequently, the potential of the charge holding unit 105 in each selected pixel cell rises to Hi and thus the amplification transistor 104 goes ON. As a result, the pixel signal is output. On the other hand, the potential of the charge holding unit 105 of each pixel cell 10 in the non-selected rows is maintained at Lo level and thus the amplification transistor 104 stays OFF. As a result, no pixel signal is output.
[Patent Document 1] JP Patent Application Publication No. 2003-046864

Disclosure of the Invention

Problems the Invention is Attempting to Solve

It is strongly desired that solid-state imaging devices have an increased number of pixel cells and require lower power consumption. Thus, it is a must to reduce the size of a solid-state imaging device. In addition, a solid-state imaging device with a larger number of pixel cells needs to operated at a higher driving frequency to maintain the same frame rate. For example, in order to implement the frame rate of 5 frames/sec, a solid-state imaging device with 1.3 Mega pixel cells needs to be operated at the frequency of 18MHz and a solid-state imaging device with 3 Mega pixel cells needs to be operated at the frequency of 25MHz.

Unfortunately, however, the solid-state imaging device according to the state-of-art described above gives a rise to the following problem if the pixel size is reduced in order to increase the number of pixel cells or the driving frequency is increased. With such a solid state imaging device, an increase in dynamic range inevitably causes noise to be added to the output signal line. As a result, it is inevitable that accurate detection of pixel signals is inhibited and thus the dynamic range is reduced. The present invention is made in view of the problems noted above and aims to provide a method for driving a solid-state imaging device as well as a solid-state imaging device both capable of ensuring a wide dynamic range even if the solid state imaging device has a large number of pixel cells and is driven at a higher frequency.

Means for Solving the Problems

In order to achieve the above aim, the present invention provides a driving method for a MOS solid- state imaging device. The imaging device has, for each of a plurality of pixel cells: a photoelectric converter operable to generate a signal charge responsive to an amount of light received; a charge holding unit operable to hold the signal charge generated by the photoelectric converter; a read transistor connected between the photoelectric converter and the charge holding unit and operable to open and close; a reference voltage source operable to supply a reference voltage and a ground voltage; a reset transistor connected between the reference voltage source and the charge holding unit and operable to open and close; and an amplification transistor connected to the reference voltage source and operable to output a voltage responsive to a potential of the charge holding unit. The driving method includes the following steps to be performed in the stated order: a first step of closing the reset transistor to cause the reference voltage to be supplied to the charge holding unit; a second step of opening the reset transistor to measure an output voltage of the amplification transistor; a third step of closing the read transistor to cause the charge holding unit to hold the signal charge and then measuring an output voltage of the amplification transistor; a fourth step of closing the reset transistor to cause the reference voltage to be supplied to the charge holding unit; and a fifth step of opening the reset transistor while the reference voltage source is supplying the ground voltage to the charge holding unit. In the fifth step, the reset transistor is opened after the reset transistor undergoes a state transition from a closed state temporarily toward an open state and back to the closed state. The state transition occurs in response to the supply of the ground voltage from the reference voltage source to the charge holding unit.

Effects of the Invention

With the above arrangement, it is ensured that the potential of the charge holding unit is reliably dropped to Lo. Thus, even after the reference voltage source is switched back to the reference voltage, the output signal line is still maintained at the reference voltage. This serves to prevent the dynamic range reduction that would otherwise be caused by the coupling capacity, which increases with the number of pixel cells.

In the fifth step, it is preferable that the reset transistor be opened a predetermined time period after the voltage supplied from the reference voltage source is switched from the reference voltage to the ground voltage. The predetermined time period corresponds in length to a product of a coupling capacity and a gate input impedance of the reset transistor. The coupling capacity occurs between (i) a signal line connecting the reset and amplification transistors to the reference voltage source and (ii) a gate input line of the reset transistor.

In another aspect, the present invention provides a MOS solid-state imaging device having a plurality of pixel cells arranged in a matrix. The imaging device includes, for each pixel cell: a photoelectric converter operable to generate a signal charge responsive to an amount of light received; a charge holding unit operable to hold the signal charge generated by the photoelectric converter; a read transistor connected between the photoelectric converter and the charge holding unit and operable to open and close; a reference voltage source operable to supply a reference voltage and a ground voltage; a reset transistor connected between the reference voltage source and the charge holding unit and operable to open and close; and an amplification transistor connected to the reference voltage source and operable to output a voltage responsive to a potential of the charge holding unit. The reset transistor is closed to cause the reference voltage to be supplied to the charge holding unit. Next, the reset transistor is opened and an output voltage of the amplification transistor is measured. Next, the read transistor is closed to cause the charge holding unit to hold the signal charge and an output voltage of the amplification transistor is measured. Next, the reset transistor is closed to cause the reference voltage to be supplied to the charge holding unit. Next, the reset transistor is opened after the reset transistor undergoes a state transition from a closed state temporarily toward an open state and back to the closed state. The state transition occurs after the reference voltage source starts to apply the ground voltage to the charge holding unit.

The above structure provides a solid- state imaging device that is small in size and large in number of pixel cells and yet with a wide dynamic range.

The imaging device may further include a row scanning circuit operable to generate a read pulse signal to be supplied to the read transistor and a reset pulse signal to be supplied to the reset transistor. The row scanning circuit includes: a pulse generating unit operable to generate a clock signal, a reset signal, and a read signal, each of which is a pulse signal; a shift register operable to sequentially output pulses of the clock signal on a row-by-row basis of the pixel cells; and an AND circuit operable to supply (i) a result of a logical AND operation between an output signal of the shift register and the reset signal to a gate electrode of the reset transistor and (ii) a result of a logical AND operation between an output signal of the shift register and the read signal to a gate electrode of the read transistor.

Brief Description Of The Drawings

Fig. 1 is a circuit diagram illustrating the major structure of a MOS solid-state imaging device according to the state-of-the-art;

Fig. 2 is a timing chart illustrating operation of the MOS solid-state imaging device according to the state-of-the-art;

Fig. 3 is a circuit diagram illustrating the major structure of a solid-state imaging device according to an embodiment of the present invention;

Fig. 4 is a block diagram illustrating the structure of a row scanning circuit according to the embodiment;

Fig. 5 is a timing chart of operation of the row scanning circuit according to the embodiment;

Fig. 6 is a flowchart of operation of the solid-state imaging device according to the embodiment;

Fig. 7 is a flowchart of operation of the solid-state imaging device in the case where the reset pulse n is not maintained at Hi for a sufficient time period; and

Fig. 8A is a timing chart illustrating VDDCELL and the reset pulse n, and Fig. 8B is a graph illustrating the relation between the holding time t (i.e., the time period during which the reset pulse n is maintained at Hi while the potential of VDDCELL is at Lo) and the saturated output of the pixel cell.

Reference Numerals

| 1, 3 | Solid-State Imaging Device |
| 10, 30 | Pixel Cell |
| 101, 301 | Photoelectric Converter |
| 102, 302 | Read Transistor |
| 103, 303 | Reset Transistor |
| 104, 304 | Amplification Transistor |
| 105, 305 | Charge Holding Unit |
| 106, 306 | Output Unit |
| 111, 311 | Transistor |

Best Mode for Carrying Out the Invention

The following describes an embodiment of a method for driving a solid-state imaging device according to the present invention, with reference to the accompanying drawings.

[1] Structure of Solid-State Imaging Device

First of all, the following describes the structure of a MOS solid-state imaging device according to the embodiment. The solid-state imaging device according to the embodiment is generally identical in structure to the solid-state imaging device according to the state-of-art described above.

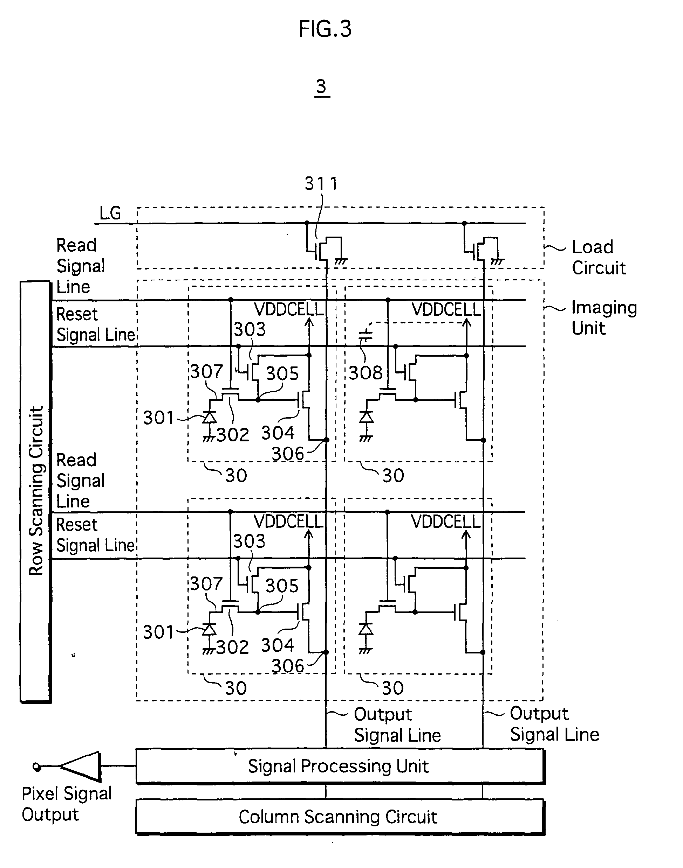

Fig. 3 is a circuit diagram illustrating the major structure of the solid-state imaging device according to the embodiment. As illustrated in Fig. 3, the solid-state imaging device 3 is composed of a row scanning circuit, a load circuit, animagingunit, asignalprocessingunit, andacolumnscanning circuit.

The imaging unit is composed of a number of pixel cells 30 in two-dimensional array and outputs pixel signals to the signal processing unit via respective output signal lines. The row scanning circuit supplies read and reset pulses to the imaging unit to cause pixel signals to be output on a row-by-row basis.

In this embodiment, a pixel signal refers to a signal indicative of the potential difference between a reference potential and a signal potential. The reference potential refers to a potential that is output from a charge holding unit 305 of each pixel cell 30 to an output unit 306 via an amplification transistor 304, in response to Hi potential supplied from a power supply unit (VDDCELL). Further, the signal potential refers to a potential that is output from the charge holding unit 305 to the output unit 306 via the amplification transistor 304, in response to electrons emitted from the photoelectric converter 301. The amount of electrons emitted is responsive to the amount of light received.

Note that the row scanning circuit inputs a read pulse to a read transistor 302 to cause the reference potential to be output. In addition, the row scanning circuit inputs a reset pulse to a reset transistor 303 to cause the signal potential to be output.

The signal processing unit reads the reference potential and the signal potential at different temporal points and obtains a pixel signal indicative of the difference in potential of the output signal line read at the two temporal points. The signal processing unit receives pixel signals on a row-by-row basis and processes the received signals and outputs the resulting signals. The column scanning circuit inputs an operation pulse to the signal processing unit and causes the processed pixel signals to be output on a column-by-column basis.

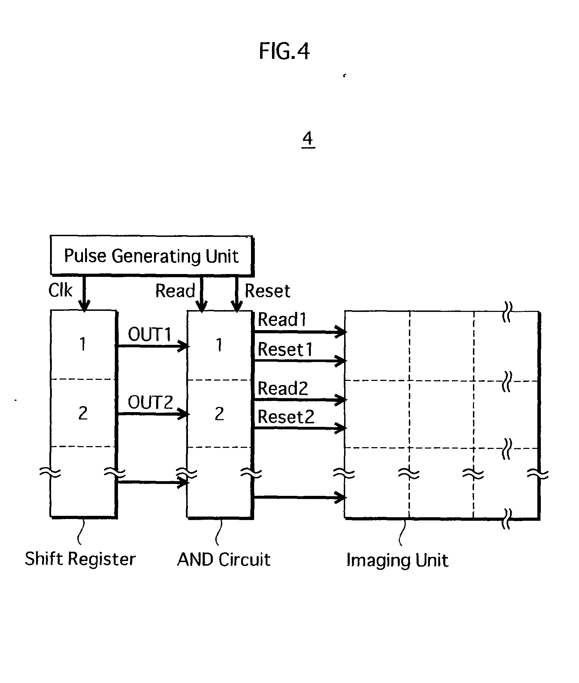

Fig. 4 is a block diagram illustrating the structure of the row scanning circuit according to the embodiment. As illustrated in Fig. 4, the row scanning circuit 4 is composed of a pulse generator, a shift register, and an AND circuit, and supplies a driving pulse to the imaging unit. The pulse generator generates and supplies a clock signal Clk, which is a cyclical pulse signal, to the shift register. The pulse generator generates and supplies a read signal Read and a reset signal Reset to the AND circuit.

In accordance with the clock signal Clk, the shift register sequentially generates output signals Out1, Out2, ... for respective cells and supplies the resulting output signals to the corresponding cells of the AND circuit.

The AND circuit sequentially carries out the logical AND operations on the output signals Out1, Out2, ... with the read signal Read for the respective cells. Similarly, the AND circuit sequentially carries out the logical AND operations on the output signals Out1, Out2, ... with the reset signal Reset for the respective cells. The AND circuit then outputs the read pulses Read1, Read2, ... to the read signal lines on the respective rows of the imaging unit, and outputs the reset pulses Reset1, Reset2,... to the reset signal lines on the respective rows of the imaging unit.

The pixel cells 30 of the imaging unit are sequentially selected with application of the read pulses Read1, Read2, ... and the reset pulses Reset1, Reset2, ... by the row scanning circuit. When selected, each pixel cell 30 outputs a pixel signal to the signal processing unit.

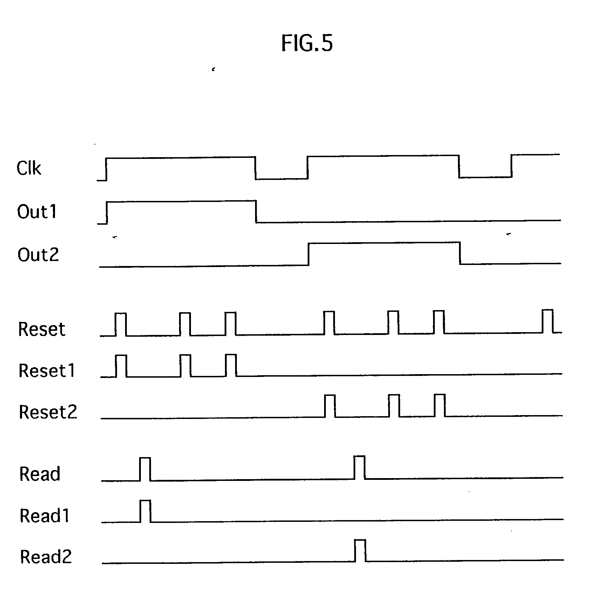

Fig. 5 is a timing chart of operation of the row scanning circuit. As illustrated in Fig. 5, the pulse generating circuit outputs one pulse of the read signal Read and three pulses of the reset signal Reset per cycle of the clock signal Clk.

In response, the shift register sequentially outputs the output signals Out1, Out2, ... for the respective cells. The AND circuit sequentially carries out the logical AND operations on the output signals Out1, Out2, ... with the read signal Read to generate readpulses Read1, Read2, .... Similarly, the AND circuit sequentially carries out the logical AND operations on the output signals Out1, Out2, ... with the reset signal Reset to generate reset pulses Reset1, Reset2, ....

That is to say, the row scanning circuit is allowed to control the pulse width of the reset pulses Reset1, Reset2, ... by controlling the pulse width of the reset signal Reset supplied by the pulse generating circuit to the AND circuit.

[2] Operation of Solid-State Imaging Device

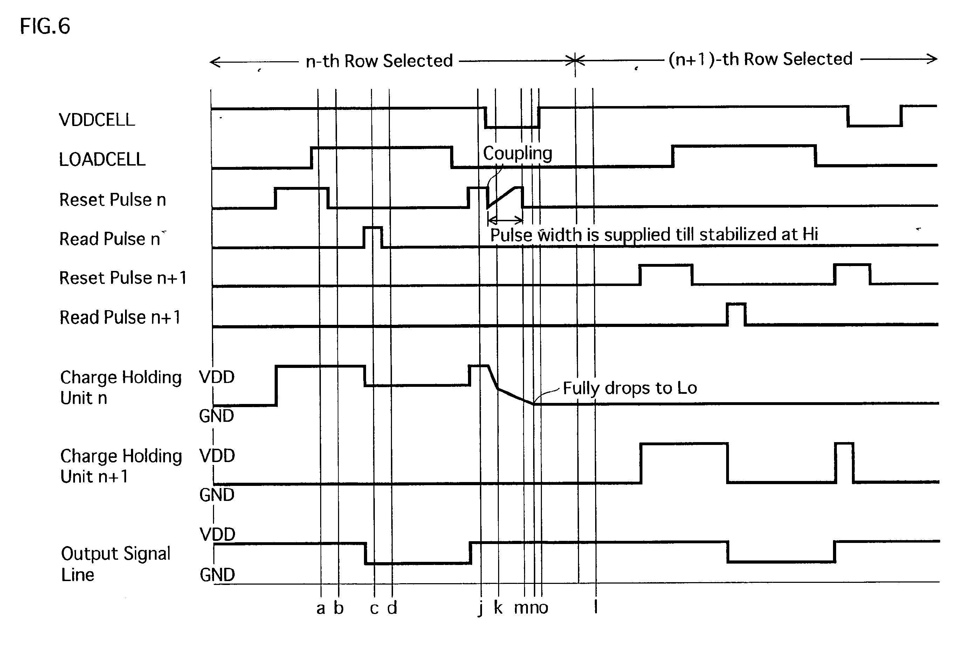

Next, the following describes operation of the solid-state imaging device 3. Fig. 6 is a flowchart of operation of the solid-state imaging device 3. The attention is focused on the cells in the n-th and n+1-th rows.

In the description, it is supposed that VDDCELL is at the high potential level Hi, whereas LOADCELL, the reset pulse n, the read pulse n, the reset pulse n+1 and the read pulse n+1 are all at the low potential level Lo. In addition, the charge holding units n and n+1 are at the potential level GND, whereas an output signal line is at the potential level VDD. The following operating steps are performed to first select the pixel cells 30 in the n-th row.

As illustrated in Fig. 6, first, the reset pulse n is switched to Hi and thus the reset transistor 303 goes ON. As a result, the potential of the charge holding unit n becomes equal to Hi of VDDCELL and thus the amplification transistor 304 outputs a responsive level of potential the output unit 306 (Fig. 6, Point a).

During the time, the output signal line is maintained at VDD, which is the potential output when the charge holding unit is at Hi, without a change.

Next, the reset pulse n is switched to Lo and thus the reset transistor 303 goes OFF. Yet, the charge holding unit n is still maintained at Hi and thus a given amount of electric charges are accumulated therein (Fig. 6, Point b).

Next, the read pulse n is switched to Hi and thus the read transistor 302 goes ON. As a result, the electronic charges having been accumulated responsively to the amount of light received by the photoelectric converter 301 are read into the charge holding unit n. Consequently, the potential of the charge holding unit n drops. Then, the potential of the output unit 306 of the amplification transistor 304 drops along with the potential of the output signal line (Fig. 6, Point c).

Next, the read pulse n is switched to Lo and thus the read transistor 302 goes OFF (Fig. 6, Point d). The signal processing unit detects the potential of the output signal line at the temporal points b and d to measure the potential difference as a pixel signal.

Next, the reset pulse n is switched to Hi and thus the reset transistor 303 goes ON. As a result, the potential of the charge holding unit n becomes equal to Hi of VDDCELL and thus the amplification transistor 304 outputs a responsive level of potential from the output unit 306. Consequently, the potential of the output signal line rises (Fig. 6, Point j). Thereafter, the potential of VDDCELL is dropped from Hi to Lo.

As illustrated in Fig. 3, a coupling capacity 308 occurs between VDDCELL and the reset signal line. Thus, when VDDCELL drops to Lo, the reset pulse n temporarily drops from Hi (Fig. 6, Point k). However, after the electric charges corresponding in amount to the coupling capacity 308 is accumulated, the reset pulse n rises back to Hi.

During the time when the reset pulse n is at Hi, the reset transistor stays ON. Thus, the potential of the charge holding unit n becomes equal to Lo of VDDCELL. The reset pulse n is maintained at Hi for a time period that is sufficiently long for the charge holding unit n to fully drop to Lo. After the expiration of the time period, the reset pulse n is switched to the Lo (Fig. 6, Point m).

With the above arrangement, it is ensured that the potential of the charge holding unit reliably drops to Lo which is the same potential as VDDCELL (Fig. 6, Point n). Note that LOADCELL that is the potential of the signal line LG connected to the load circuit is maintained at Lo as long as the reset pulse n is maintained at Hi. Consequently, the transistor 311 stays OFF and the output signal line is maintained at VDD.

With the above operating steps, each pixel cell 30 in the n-th row completes output of the pixel signal (Fig. 6, Point n).

Next, the pixel cells in the (n+1)-th row are selected (Fig. 6, Point 1). Thus, the n-th row is deselected, so that the reset pulse n and the charge holding unit n are both maintained at Lo.

[3] Features

Owing to the above-deceived structure, the solid-state imaging device 3 embodies the following features.
(1) According to the embodiment, in order to fully drop the potential of the charge holding unit n to Lo of VDDCELL (GND), the reset pulse n is input to the reset transistor 303. The reset pulse n has a duration extending beyond a point at which the potential of VDDCELL is switched from Hi to Lo.

If the coupling capacity occurring between VDDCELL and the reset signal line as well as the gate impedance of the reset transistor 103 are negligible, the potential of the charge holding unit n drops to Lo of VDDCELL immediately upon switching of the reset pulse n to Hi.
Generally, however, a solid-state imaging device having a large number of pixel cells and thus each pixel cell is small in size, the coupling capacity and the gate impedance noted above exceed a negligible level. With this being a situation, the reset pulse n cannot be maintained at Hi when VDDCELL drops to Lo potential.

Also, if the driving frequency is increased due to the increase in pixel number, the pulse width of a reset pulse n becomes narrower. As a consequence, the reset pulse n drops to Lo potential before the potential of charge holding unit n drops to Lo of VDDCELL.
As a result, the reset transistor 303 goes OFF before the potential of the charge holding unit n drops to Lo of VDDCELL and thus fails to reset the potential of the charge holding unit n. For this reason, with the structure and the driving method of the solid-state imaging device 3, an increase in pixel number inevitably narrows the dynamic range.

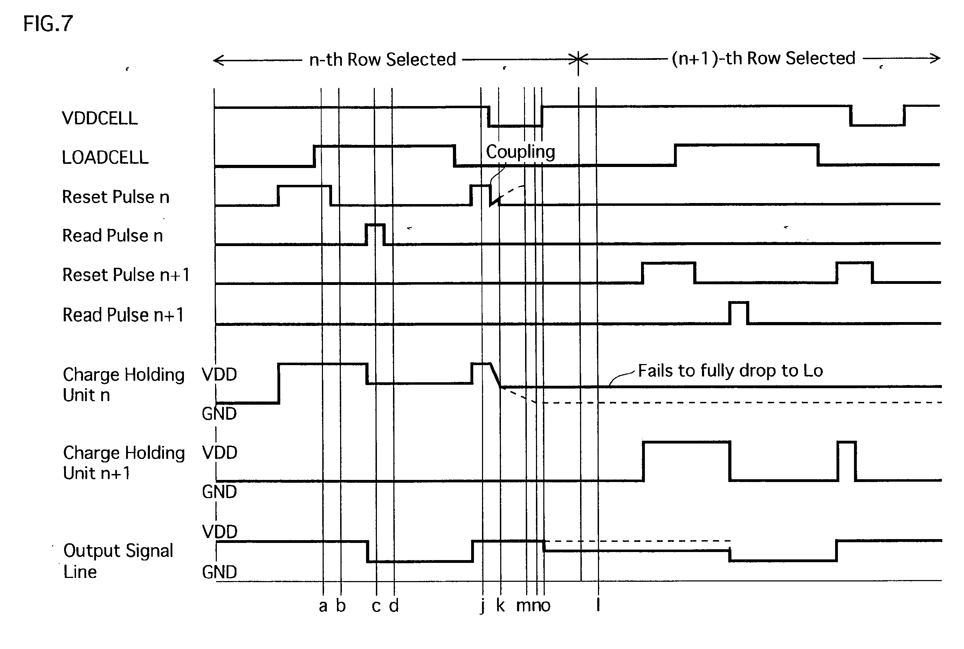

Fig. 7 is a flowchart of operation of the solid-state imaging device in the case where the reset pulse n is not maintained at Hi for a sufficient time period. As illustrated in Fig. 7, in the case where the time period during which the reset pulse n is maintained at Hi is not sufficiently long, VDDCELL is switched to Hi before the potential of the charge holding unit n fully drops to Lo of VDDCELL. Responsive to the potential of the charge holding unit n, the potential of the output signal line drops. With this being a situation, a signal charge of each pixel cell in the n+1-th row cannot be detected accurately.

In order to address the above problems, the embodiment of the present invention applies the reset pulse n having a wider pulse width. Owing to such a pulse width, the rest transistor 303 stays ON until the rest pulse n once drops to Lo in response to a drop of VDCELL and returns back to Hi. That is to say, the rest transistor 303 stays ON until the potential of the charge holding unit n fully drops to Lo of VDDCELL.

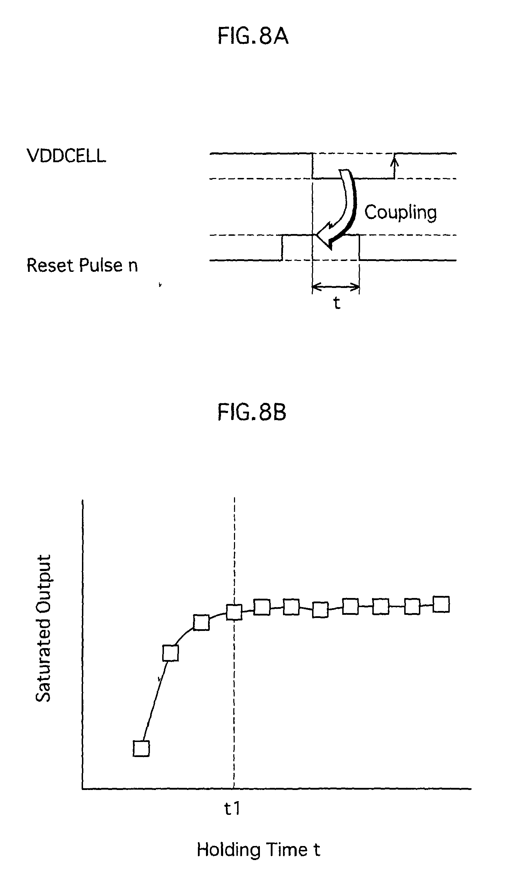

Figs. 8 are views illustrating the relation between the timing of the potential of VDDCELL and the reset pulse n and also the saturated output of each pixel cell 30. More specifically, Fig. 8A is a timing chart illustrating VDDCELL and the reset pulse n, whereas Fig. 8B is a graph illustrating the relation between the holding time t and the saturated output of the pixel cell. The holding time t is the time period during which the reset pulse n is maintained at Hi while the potential of VDDCELL is at Lo.

As illustrated in Fig. 8A, the reset pulse n is maintained at Hi both prior to and subsequent to the transition of VDDCELL from Hi to Lo. The reset pulse n then drops to Lo before VDDCELL is switched back to Hi. This is to avoid that VDDCELL is switched to Hi while the reset transistor stays ON. In such a case, it is inevitable that the potential of the charge holding unit n rises to Hi.
As described above, if the holding time t is short, the reset transistor 303 goes OFF before the potential of the charge holding unit n drops to Lo of VDDCELL. As a consequence, the pixel cell output is saturated at a lower level and thus the dynamic range is reduced. On the other hand, if the holding time t is sufficiently long, the reset transistor 303 goes OFF after the potential of the charge holding unit n drops to Lo of VDDCELL. This ensures that the pixel cell output is saturated at a higher level.

As illustrated in Fig. 8B, the output values become saturated and generally constant with the holding time t exceeding the time t1. According to this embodiment, the row scanning circuit outputs the reset pulse n of which holding time t is approximately equal to the time t1. The time t1 is a time period taken for the reset pulse n to rise back to Hi after once dropped in response to that VDDCELL is switched to Lo.
The time t1 differs depending on the number and size of pixel cells and the size of transistors. Let "R" denote the gate input impedance of the reset transistor 303 and "C" denotes the electrostatic capacity of the coupling capacity 308, t1 is then expressed as follows:

$$t1 = R \times C$$

Accordingly, for example, if the gate input impedance R of the reset transistor 303 is 1,000 kΩ and the electrostatic capacity C of the coupling capacity 308 is 0.2pF, the time t1 is then calculated to be 0.2 μsec).

For the sake of stable operation of the solid-state imaging device, it is preferable that the holding time t is longer than the time t1, so as to ensure that the potential of the reset pulse n stabilizes at Hi.
(2) According to this embodiment, the output signal line is maintained at VDD even after the potential of the charge holding unit n drops to Lo of VDDCELL. Thus, even if the reset pulse n is supplied at the temporal point a, the potential of the output signal line remains unchanged. Thus, irrespective of the coupling capacity occurring between the gate electrode of the amplification transistor 304 and the output unit 306, the potential of each charge holding unit 305 in the non-selected rows is ensured to be maintained at Lo.

According to the structure disclosed in Patent Document 1, the potential of each charge holding unit 105 in the non-selected rows changes in response to an input of the reset pulse n (Fig. 2, Point a) if a large coupling capacity occurs between the gate electrode of the amplification transistor 104 and the output unit 106. Because of the change, current may be leaked from the amplification transistors 304 in the non-selected rows, which cases the dynamic range to be reduced.

The present embodiment is capable of preventing the reduction in dynamic range that would otherwise occur due to the coupling capacity. Thus, the S/N ratio of pixel signals is improved and thus high-quality imaging is achieved.

Industrial Applicability

The method for driving a solid-state imaging device according to the present invention is a useful technique for suppressing dynamic range reduction of a MOS solid-state imaging device which is reduced in size and increased in number of pixel cells.

**Claims**

1. A driving method for a MOS solid-state imaging device that has, for each of a plurality of pixel cells:

   a photoelectric converter operable to generate a signal charge responsive to an amount of light received;
   a charge holding unit operable to hold the signal charge generated by the photoelectric converter;
   a read transistor connected between the photoelectric converter and the charge holding unit and operable to open and close;
   a reference voltage source operable to supply a reference voltage and a ground voltage;
   a reset transistor connected between the reference voltage source and the charge holding unit and operable to open and close; and
   an amplification transistor connected to the reference voltage source and operable to output a voltage responsive to a potential of the charge holding unit,

   the driving method comprising the following steps to be performed in the stated order:

   a first step of closing the reset transistor to cause the reference voltage to be supplied to the charge holding unit;
   a second step of opening the reset transistor to measure an output voltage of the amplification transistor;
   a third step of closing the read transistor to cause the charge holding unit to hold the signal charge and then measuring an output voltage of the amplification transistor;
   a fourth step of closing the reset transistor to cause the reference voltage to be supplied to the charge holding unit; and
   a fifth step of opening the reset transistor while the reference voltage source is supplying the ground voltage to the charge holding unit,

   wherein in the fifth step, the reset transistor is opened after the reset transistor undergoes a state transition from a closed state temporarily toward an open state and back to the closed state, the state transition occurring in response to the supply of the ground voltage from the reference voltage source to the charge holding unit.

2. The driving method according to Claim 1,
   wherein in the fifth step, the reset transistor is opened a predetermined time period after the voltage supplied from the reference voltage source is switched from the reference voltage to the ground voltage, and
   wherein the predetermined time period corresponds in length to a product of a coupling capacity and a gate input impedance of the reset transistor, the coupling capacity occurring between (i) a signal line connecting the reset and amplification transistors to the reference voltage source and (ii) a gate input line of the reset transistor.

3. A MOS solid-state imaging device having a plurality of pixel cells arranged in a matrix, the device comprising, for each pixel cell:

   a photoelectric converter operable to generate a signal charge responsive to an amount of light received;
   a charge holding unit operable to hold the signal charge generated by the photoelectric converter;
   a read transistor connected between the photoelectric converter and the charge holding unit and operable to open and close;
   a reference voltage source operable to supply a reference voltage and a ground voltage;
   a reset transistor connected between the reference voltage source and the charge holding unit and operable to open and close; and
   an amplification transistor connected to the reference voltage source and operable to output a voltage responsive to a potential of the charge.holding unit,

wherein the reset transistor is closed to cause the reference voltage to be supplied to the charge holding unit,

next, the reset transistor is opened and an output voltage of the amplification transistor is measured,

next, the read transistor is closed to cause the charge holding unit to hold the signal charge and an output voltage of the amplification transistor is measured,

next, the reset transistor is closed to cause the reference voltage to be supplied to the charge holding unit, and

next, the reset transistor is opened after the reset transistor undergoes a state transition from a closed state temporarily toward an open state and back to the closed state, the state transition occurring after the reference voltage source starts to apply the ground voltage to the charge holding unit.

4. The solid-state imaging device according to Claim 3, further comprising:

a row scanning circuit operable to generate a read pulse signal to be supplied to the read transistor and a reset pulse signal to be supplied to the reset transistor,

wherein the row scanning circuit includes:

a pulse generating unit operable to generate a clock signal, a reset signal, and a read signal, each of which is a pulse signal;

a shift register operable to sequentially output pulses of the clock signal on a row-by-row basis of the pixel cells; and

an AND circuit operable to supply (i) a result of a logical AND operation between an output signal of the shift register and the reset signal to a gate electrode of the reset transistor and (ii) a result of a logical AND operation between an output signal of the shift register and the read signal to a gate electrode of the read transistor.

**Amended claims under Art. 19.1 PCT**

**1.** (Amended) A driving method for a MOS solid-state imaging device that has, for each of a plurality of pixel cells:

a photoelectric converter operable to generate a signal charge responsive to an amount of light received;

a charge holding unit operable to hold the signal charge generated by the photoelectric converter;

a read transistor connected between the photoelectric converter and the charge holding unit and operable to open and close;

a reference voltage source operable to supply a reference voltage and a ground voltage;

a reset transistor connected between the reference voltage source and the charge holding unit and operable to open and close; and

an amplification transistor connected to the reference voltage source and operable to output a voltage responsive to a potential of the charge holding unit,

the driving method comprising the following steps to be performed in the stated order:

a first step of closing the reset transistor to cause the reference voltage to be supplied to the charge holding unit and then measuring an output voltage of the amplification transistor;

a second step of closing the read transistor to cause the signal charge to be read into the charge holding unit

a reset transistor connected between the reference voltage source and the charge holding unit and operable to open and close; and

an amplification transistor connected to the reference voltage source and operable to output a voltage responsive to a potential of the charge holding unit,

the driving method comprising the following steps to be performed when a selected n-th row of pixel cells is deselected:

a step of switching, with the reset transistor closed, the reference voltage that is being supplied to the charge holding unit from the reference voltage source, to the ground voltage; and

a step of opening the reset transistor a predetermined time period after the switching,

wherein the predetermined time period corresponds in length to a product of a coupling capacity and a gate input impedance of the reset transistor, the coupling capacity occurring between (i) a signal line connecting the amplification transistor to the reference voltage source and (ii) a gate input line of the reset transistor.

# FIG.1

<u>1</u>

FIG.2

## FIG.3

<u>3</u>

FIG.4

4

Pulse Generating Unit

Clk

Read

Reset

Read1

Reset1

Read2

Reset2

OUT1

OUT2

Shift Register

AND Circuit

Imaging Unit

# FIG.5

Clk

Out1

Out2

Reset

Reset1

Reset2

Read

Read1

Read2

EP 1 868 376 A1

# FIG.6

| | n-th Row Selected | (n+1)-th Row Selected |

**VDDCELL**

**LOADCELL**

Coupling

**Reset Pulse n**

**Read Pulse n**  —  Pulse width is supplied till stabilized at Hi

**Reset Pulse n+1**

**Read Pulse n+1**

**Charge Holding Unit n**  VDD / GND  —  Fully drops to Lo

**Charge Holding Unit n+1**  VDD / GND

**Output Signal Line**  VDD / GND

a b   c d        j k   mno      l

EP 1 868 376 A1

## FIG.7

← n-th Row Selected ——— ※ ——— (n+1)-th Row Selected →

VDDCELL

LOADCELL

Coupling

Reset Pulse n

Read Pulse n

Reset Pulse n+1

Read Pulse n+1

Charge Holding Unit n — VDD / GND — Fails to fully drop to Lo

Charge Holding Unit n+1 — VDD / GND

Output Signal Line — VDD / GND

a b   c d     j k mno   l

EP 1 868 376 A1

# FIG.8A

VDDCELL

Coupling

Reset Pulse n

t

# FIG.8B

Saturated Output

t1

Holding Time t

### INTERNATIONAL SEARCH REPORT

| International application No. |
| --- |
| PCT/JP2006/301856 |

| A. CLASSIFICATION OF SUBJECT MATTER |
| --- |
| *H04N5/335*(2006.01) |
| According to International Patent Classification (IPC) or to both national classification and IPC |

| B. FIELDS SEARCHED |
| --- |
| Minimum documentation searched (classification system followed by classification symbols) |
| *H04N5/335*(2006.01) |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X | JP 2004-304610 A (Matsushita Electric Industrial Co., Ltd.), 28 October, 2004 (28.10.04), Fig. 6 (Family: none) | 1-4 |

☐ Further documents are listed in the continuation of Box C.     ☐ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 28 March, 2006 (28.03.06) | Date of mailing of the international search report <br> 04 April, 2006 (04.04.06) |
| --- | --- |
| Name and mailing address of the ISA/ <br> Japanese Patent Office | Authorized officer |
| Facsimile No. | Telephone No. |

Form PCT/ISA/210 (second sheet) (April 2005)

**EP 1 868 376 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003046864 A